# EUROPÄISCHE PATENTSCHRIFT

(11) **EP 4 186 794 B1**
(45) Veröffentlichungstag und Bekanntmachung des Hinweises auf die Patenterteilung: **21.02.2024**
(21) Anmeldenummer: 21211250.2
(22) Anmeldetag: 30.11.2021
(51) Int. Cl.: B64D 11/06, B64D 11/00

(54) **PASSAGIERSITZANORDNUNG MIT SENSORDATENERFASSUNG UND PASSAGIERFLUGZEUG MIT DERARTIGER SITZANORDNUNG**
PASSENGER SEAT ASSEMBLY WITH SENSOR DATA RECORDING AND PASSENGER AIRCRAFT WITH SUCH A SEAT ASSEMBLY
AGENCEMENT DE SIÈGE PASSAGER À COLLECTE DE DONNÉES DE CAPTEUR ET AVION DE LIGNES DOTÉ D'UN TEL AGENCEMENT DE SIÈGE

(43) Veröffentlichungstag der Anmeldung: 31.05.2023
(73) Patentinhaber: KID-Systeme GmbH, 21614 Buxtehude (DE)
(72) Erfinder: Vogel, Carsten, 21614 Buxtehude (DE); Zachäus, Matthias, 21614 Buxtehude (DE)
(74) Vertreter: Isarpatent

(56) Entgegenhaltungen:
- EP-A1- 3 141 483
- EP-A1- 3 363 737
- WO-A1-2015/022238
- DE-A1- 19 722 922
- US-A1- 2020 130 844

## Beschreibung

### TECHNISCHES GEBIET DER ERFINDUNG

Die Erfindung betrifft eine Sitzanordnung für Passagiere mit einer Sensordatenerfassung von einer Vielzahl der Sitzanordnung zugeordneten Sensoren, ein Passagierflugzeug mit einer derartigen Sitzanordnung sowie ein Verfahren zur passagierbezogenen Sensordatenerfassung in einer Passagiersitzanordnung in einem Passagierflugzeug.

### TECHNISCHER HINTERGRUND

Persönliche elektronische Geräte ("Personal Electronic Devices", PEDs) sind heutzutage ubiquitär. Normalerweise werden diese PEDs mit dem Benutzer mitgeführt, wohin er auch reist, auch an Bord von Flugzeugen. Für den Komfort der Passagiere ist es wünschenswert, den Passagieren an Bord eines Flugzeugs die Möglichkeit zu geben, die elektrischen Energiespeicher der PEDs während ihres Aufenthalts an Bord des Flugzeugs aufzuladen oder die PEDs im Netzbetrieb zu halten. Fluggesellschaften bieten in der Regel Auflademöglichkeiten für PEDs wie Laptops, Mobiltelefone, Smartphones, Tablet-PCs und dergleichen an, bei denen USB-Anschlüsse oder Stromnetzanschlüsse für jeden Passagier einzeln an seinem jeweiligen Flugzeugsitz verwendet werden.

Für die lokale Versorgung elektrischer Verbraucher - sowohl fest installierter als auch mobiler Geräte wie PEDs - an Bord eines Flugzeugs werden lokal installierte Leistungsverteilungssysteme mit Leistungswandlern eingesetzt, an die eine Vielzahl von elektrischen Verbrauchern unterschiedlicher Leistungsanforderungen angeschlossen werden können. Leistungsverteilungssysteme für Sitzgruppen in Passagierflugzeugen beispielsweise können PEDs aller Passagiere der Sitzgruppe gleichermaßen mit elektrischer Leistung versorgen, beispielsweise für einen Netzbetrieb und/oder ein Aufladen der Energiespeicher der PEDs.

Die Druckschrift EP 3 578 462 A1 offenbart ein Passagierunterstützungssystem mit einer Verarbeitungseinheit für künstliche Intelligenz, welches mit einer Sensorschnittstelle zur Erfassung von Umgebungsvariablen in der Kabine eines Passagierflugzeugs ausgestattet ist. Die Druckschrift DE 10 2009 009 189 A1 offenbart ein Sensornetzwerk in einem Luftfahrzeug, bei welchem Daten von mehreren im Luftfahrzeug verteilten Sensorknoten in einer zentralen Datensammel- und - auswerteeinheit erfasst werden. Die Druckschrift GB 2 496 452 A offenbart einen Flugzeugsitz mit Aktuatoren und Sitzbelegungssensorik. Die Druckschrift DE 10 2018 128 138 A1 offenbart Verfahren zur Analyse eines Sitzkomforts bei einem Flugzeugsitz. Die Druckschrift EP 3 141 483 A1 offenbart ein Managementsystem für das Wohlergehen, die Sicherheit und den Komfort eines Flugzeugpassagiers mit sitzgebundener Sensorik. Die Druckschrift US 2017/0283086 A1 offenbart ein Crewinformationssystem für eine Flugzeugcrew, welches mit Sensoren in Passagiersitzen, Gepäckablagen und Anschnallgurten zur Sensordatenerfassung verbunden ist. DE 197 22 922 A1 beschreibt ein Passagiersitzanordnung für ein Passagierflugzeug.

### ZUSAMMENFASSUNG DER ERFINDUNG

Eine der Aufgaben der Erfindung besteht darin, Lösungen für die Erfassung verschiedener Daten in der direkten Passagierumgebung eines Passagiers eines Passagierflugzeugs zu finden, die zentral gesammelt und ausgewertet werden können.

Diese und andere Aufgaben werden durch eine Passagiersitzanordnung mit den Merkmalen des Anspruchs 1, ein Passagierflugzeug mit den Merkmalen des Anspruchs 6 sowie ein Verfahren zur passagierbezogenen Sensordatenerfassung in einer Passagiersitzanordnung in einem Passagierflugzeug mit den Merkmalen des Anspruchs 12 gelöst.

Gemäß einem ersten Aspekt der Erfindung umfasst eine Passagiersitzanordnung für ein Passagierflugzeug eine Passagiersitzbaugruppe mit mindestens einem Passagiersitz, ein elektrisches Energieversorgungssystem, welches ein erstes Elektronikgehäuse, in welchem elektrische Leistungswandlerkomponenten angeordnet sind, und ein zweites Elektronikgehäuse, in welchem elektrische Ausgangsanschlüsse für den Anschluss von elektronischen Endgeräten angeordnet sind, aufweist, und eine Vielzahl von der Passagiersitzbaugruppe zugeordneten Sensoren auf, welche mit einer Sensordatenschnittstelle des ersten Elektronikgehäuses des elektrischen Energieversorgungssystems gekoppelt sind. Das elektrische Energieversorgungssystem weist eine Sensordatenverarbeitungseinrichtung auf, die dazu ausgelegt ist, von den Sensoren über die Sensordatenschnittstelle erfasste Sensordaten aufzubereiten und an eine zentrale Sensordatenauswertevorrichtung des Passagierflugzeugs weiterzuleiten. Gemäß einem zweiten Aspekt der Erfindung umfasst ein Passagierflugzeug mindestens eine Passagiersitzanordnung gemäß dem ersten Aspekt der Erfindung, sowie eine Passagierkabine, mindestens eine elektrische Energiequelle, und einer Sensordatenauswertevorrichtung. Die mindestens eine Passagiersitzanordnung ist mit einer Sitzbefestigungsschiene im Kabinenboden der Passagierkabine montiert. Das zweite Elektronikgehäuse ist jeweils mit der mindestens einen elektrischen Energiequelle über in oder an der Sitzbefestigungsschiene entlang verlaufende elektrische Zuleitungen verbunden.

Gemäß einem dritten Aspekt der Erfindung umfasst ein Verfahren zur passagierbezogenen Sensordatenerfassung in einer Passagiersitzanordnung in einem Passagierflugzeug die Schritte des Erfassens von passagierbezogenen Sensordaten durch eine Vielzahl von einer Passagiersitzbaugruppe mit mindestens einem Passagiersitz zugeordneten Sensoren, des Übermittelns der erfassten passagierbezogenen Sensordaten über eine Sensordatenschnittstelle eines ersten Elektronikgehäuses, in welchem elektrische Leistungswandlerkomponenten angeordnet sind, eines der Passagiersitzbaugruppe zugeordneten elektrischen Energieversorgungssystems, des Aufbereitens der von den Sensoren über die Sensordatenschnittstelle erfassten Sensordaten durch eine Sensordatenverarbeitungseinrichtung des elektrischen Energieversorgungssystems, und des Weiterleitens der durch die Sensordatenverarbeitungseinrichtung aufbereiteten Sensordaten an eine zentrale Sensordatenauswertevorrichtung des Passagierflugzeugs.

Eine wesentliche Idee der Erfindung besteht darin, in einer elektrischen Energieversorgungseinrichtung für Passagiersitze eines Passagierflugzeugs zugleich eine Datenschnittstelle für Sensoren an und um den Passagiersitz des Passagierflugzeugs zu implementieren. Dadurch können unterschiedliche Sensoren angesteuert, deren Sensordaten intermittierend oder kontinuierlich erfasst und lokal in der elektrischen Energieversorgungseinrichtung aufbereitet werden. Die derart aufbereiteten passagierbezogenen Sensordaten können dann mit weiteren flugzeugbezogenen oder umgebungsbezogenen Daten angereichert und zentral ausgewertet werden.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen der erfindungsgemäßen Passagiersitzanordnung kann die Vielzahl von Sensoren optische Sensoren, Sitzbelegungssensoren, Sitzpositionssensoren, Temperatursensoren, Stromsensoren, Spannungssensoren, Bewegungssensoren und/oder Ultraschallsensoren umfassen.

Gemäß einiger weiterer Ausführungsformen der erfindungsgemäßen Passagiersitzanordnung kann die Sensordatenverarbeitungseinrichtung weiterhin dazu ausgelegt sein, Umgebungsdaten aus der Umgebung des Passagierflugzeugs zu empfangen und die von den Sensoren über die Sensordatenschnittstelle erfassten Sensordaten im Zusammenhang mit den empfangenen Umgebungsdaten aufzubereiten. Diese empfangenen Umgebungsdaten können in manchen Ausführungsformen Daten über die geographische Position des Passagierflugzeugs, über die Umgebungstemperatur des Passagierflugzeugs, über den Abflug- und/oder Zielort des Passagierflugzeugs, über das vorhergesagte Wetter am Abflug- und/oder Zielort des Passagierflugzeugs und/oder über die Lokalzeit des Passagierflugzeugs umfassen.

Gemäß einiger weiterer Ausführungsformen der erfindungsgemäßen Passagiersitzanordnung können die elektrischen Ausgangsanschlüsse des zweiten Elektronikgehäuses USB-Buchsen, Sitzbeleuchtungsanschlüsse von Passagiersitzen, Wechselspannungsanschlüsse und/oder Sitzaktuatoranschlüsse umfassen. Die von den Sensoren über die Sensordatenschnittstelle erfassten Sensordaten können dabei zeitaufgelöste Nutzungsdaten der USB-Buchsen, Sitzbeleuchtungsanschlüsse, Wechselspannungsanschlüsse und/oder Sitzaktuatoranschlüsse umfassen.

Gemäß einiger Ausführungsformen des erfindungsgemäßen Passagierflugzeugs kann das Passagierflugzeug weiterhin einen Avionikserver aufweisen, welcher mit dem erstes Elektronikgehäuse des elektrischen Energieversorgungssystems gekoppelt ist und welcher dazu ausgelegt ist, Umgebungsdaten aus der Umgebung des Passagierflugzeugs an die Sensordatenverarbeitungseinrichtung weiterzuleiten.

Gemäß einiger weiterer Ausführungsformen des erfindungsgemäßen Passagierflugzeugs kann die Vielzahl von Sensoren Sensoren aufweisen, welche in einer in der Passagierserviceeinheit über der Passagiersitzanordnung angeordnet sind.

Gemäß einiger weiterer Ausführungsformen des erfindungsgemäßen Passagierflugzeugs kann die Passagiersitzanordnung mindestens zwei nebeneinander angeordnete Passagiersitze aufweisen. Dabei kann die Passagiersitzanordnung ein Endgerät eines Bordentertainmentsystems aufweisen und die Sensordatenauswertevorrichtung des Passagierflugzeugs dazu ausgelegt sein, erfasste Sensordaten der Sensordatenverarbeitungseinrichtung auszuwerten und auf der Basis der ausgewerteten Sensordaten für jede der Passagiersitzanordnungen passagierbezogene Anzeigeinhalte an das zugeordnete Endgerät eines Bordentertainmentsystems zu übertragen.

Gemäß einiger weiterer Ausführungsformen des erfindungsgemäßen Passagierflugzeugs kann die Sensordatenverarbeitungseinrichtung über in oder an der Sitzbefestigungsschiene entlang verlaufende Datenleitungen mit der Sensordatenauswertevorrichtung des Passagierflugzeugs verbunden sein.

Gemäß einiger Ausführungsformen des erfindungsgemäßen Verfahrens kann das Verfahren weiterhin den Schritt des Erfassens von Umgebungsdaten aus der Umgebung des Passagierflugzeugs, welche von der Sensordatenverarbeitungseinrichtung bei der Aufbereitung der von den Sensoren über die Sensordatenschnittstelle erfassten Sensordaten berücksichtigt werden, aufweisen. Dabei können in manchen Ausführungsformen die empfangenen Umgebungsdaten Daten über die geographische Position des Passagierflugzeugs, über die Umgebungstemperatur des Passagierflugzeugs, über den Abflug- und/oder Zielort des Passagierflugzeugs, über das vorhergesagte Wetter am Abflug- und/oder Zielort des Passagierflugzeugs und/oder über die Lokalzeit des Passagierflugzeugs umfassen.

Gemäß einiger weiterer Ausführungsformen des erfindungsgemäßen Verfahrens kann die Vielzahl von Sensoren optische Sensoren, Sitzbelegungssensoren, Sitzpositionssensoren, Temperatursensoren, Stromsensoren, Spannungssensoren, Bewegungssensoren und/oder Ultraschallsensoren umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Illustration einer Passagiersitzanordnung für ein Passagierflugzeug gemäß einer Ausführungsform der Erfindung in Seitenansicht;
Fig. 2 ein schematisches Blockschaubild von Komponenten einer Passagiersitzanordnung für ein Passagierflugzeug gemäß einer Ausführungsform der Erfindung;
Fig. 3 eine schematische Illustration eines Flugzeugs mit einer Passagiersitzanordnung nach Fig. 1 oder 2 gemäß einer weiteren Ausführungsform der Erfindung; und
Fig. 4 ein schematisches Flussablaufdiagramm der Schritte eines Verfahrens zur passagierbezogenen Sensordatenerfassung in einer Passagiersitzanordnung in einem Passagierflugzeug gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Persönliche elektronische Geräte ("Personal Electronic Devices", PEDs) im Sinne dieser Erfindung umfassen alle elektronischen Geräte, die zur Unterhaltung, Kommunikation und/oder für Bürozwecke eingesetzt werden können. Zum Beispiel können PEDs alle Arten von Endgeräten umfassen, wie Laptops, Mobiltelefone, Smartphones, Handheld-Geräte, Palmtops, Tablet-PCs, GPS-Geräte, Navigationsgeräte, Audiogeräte wie MP3-Player, tragbare DVD- oder Bluray^{®}-Player oder Digitalkameras. Passagiersitze im Sinne dieser Erfindung können jede Form struktureller Bestandteile eines Fahrzeugs umfassen, die dazu bestimmt sind, einen Fahrgast für die Dauer der Fahrt mit dem Fahrzeug aufzunehmen. Insbesondere können Passagiersitze in Flugzeugen persönlich und zumindest vorübergehend ausschließlich vom Fluggast des Flugzeugs während des Fluges benutzt werden. Sitze bzw. Passagiersitze im Sinne der Erfindung können in Sitzbaugruppen aufgeteilte Flugzeugsitze sein, aber auch Liegen, Sessel, Betten, Suiten der ersten Klasse bzw. Businessklasse oder ähnliche Sitzmöbel innerhalb eines Flugzeugs.

Leistungswandlerkomponenten im Sinne der vorliegenden Erfindung sind alle Schaltungen und Einrichtungen, die zur Umwandlung einer eingespeisten elektrischen Stromart - Gleichstrom oder Wechselstrom - in die jeweils andere, oder zur Änderung charakteristischer Parameter wie der Spannung und der Frequenz einer eingespeisten elektrischen Stromart eingesetzt werden können. Leistungswandlerkomponenten können beispielsweise Stromrichter umfassen. Derartige Stromrichter können für die Umwandlung von Wechselstrom in Gleichstrom Gleichrichter, für die Umwandlung von Gleichstrom in Wechselstrom Wechselrichter, für die Umwandlung einer Wechselstromart in eine andere Wechselstromart Umrichter oder für die Umwandlung einer Gleichstromart in eine andere Gleichstromart Gleichspannungswandler umfassen. Leistungswandlerkomponenten im Sinne der vorliegenden Erfindung können mit Hilfe analoger Bauteile wie Widerständen, Induktivitäten und Kondensatoren und/oder elektronischer Bauelemente auf Basis von Halbleitern ausgeführt werden, wie beispielweise Dioden, Transistoren oder Thyristoren.

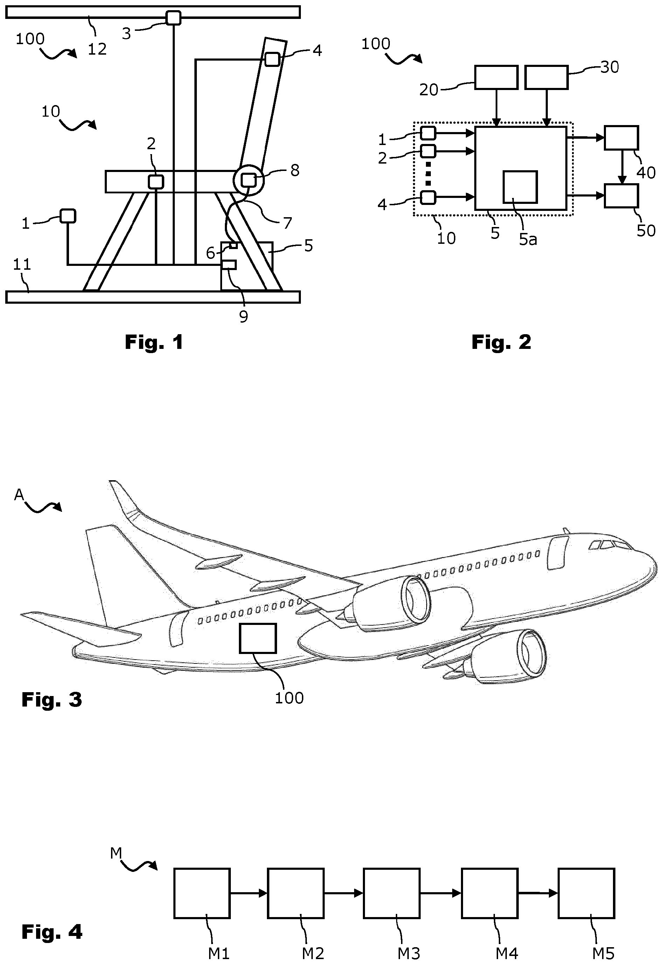

FIG. 1 zeigt eine Passagiersitzanordnung 100 in Seitenansicht in schematischem Aufbau. FIG. 2 zeigt ein schematisches Blockschaubild von Komponenten einer Passagiersitzanordnung 100 und entsprechend zugeordneter Peripheriekomponenten in einem Passagierflugzeug. Die Passagiersitzanordnung 100 kann beispielsweise eine Passagiersitzbaugruppe 10 in einem Passagierflugzeug, wie etwa dem in FIG. 3 schematisch illustrierten Flugzeug A, aufweisen. Ein Passagierflugzeug A kann dabei verschiedene Passagiersitzbaugruppen umfassen, die beispielsweise in einer Passagierkabine über eine oder mehrere im Passagierkabinenboden verlaufende Sitzbefestigungsschienen 11 fix bzw. fest montiert sind.

Die Passagiersitzbaugruppe 10 kann ein oder mehrere Passagiersitze aufweisen, die beispielsweise eine Sitzfläche und eine an die Sitzfläche angelenkte Rückenlehne aufweisen. Die Passagiersitze können dabei zum Beispiel nebeneinander angeordnet sein, d.h. mit seitlich aneinander grenzenden Sitzflächen, so dass mehrere Passagiere gleichzeitig jeweils einen Passagiersitz der Passagiersitzbaugruppe 10 besetzen können.

Weiterhin kann die Passagiersitzbaugruppe 10 ein Sitztraggestell mit vorderen Tragfüßen und hinteren Tragfüßen aufweisen, die die Sitzfläche unterstützen und tragen. Über das Sitztraggestell kann die Passagiersitzbaugruppe 10 an ein oder mehreren Sitzbefestigungsschienen 11 in der Passagierkabine montiert werden. Die Sitzbefestigungsschienen 11 können dabei beispielsweise eine Verlaufsrichtung im Kabinenboden entlang der Längsachse des Passagierflugzeugs A aufweisen, und bei mehreren Sitzbefestigungsschienen 11 insbesondere parallel zueinander verlaufen.

In oder entlang der Sitzbefestigungsschienen 11 können elektrische Zuleitungen verlaufen, über die elektrischen Energiequellen an Bord des Passagierflugzeugs A mit jeweiligen Passagiersitzbaugruppen 10 zugeordneten Energieversorgungssystemen elektrisch verbunden und mit elektrischer Energie gespeist werden können.

Jede Passagiersitzanordnung 100 in einem Passagierflugzeug A kann dabei beispielsweise über ein separates und lokal im Passagierflugzeug A montiertes Energieversorgungssystem verfügen. Die Energieversorgungssysteme können dabei modular aufgebaut sein, wie beispielhaft in FIG. 1 dargestellt. Ein Basismodul des jeweiligen Energieversorgungssystems kann auf einer der Sitzbefestigungsschienen 11 montierbar sein, während ein zugehöriges Peripheriemodul des Energieversorgungssystems an der Passagiersitzbaugruppe 10 an für den Anschluss elektrischer Verbraucher geeigneter Position montiert ist. Die Energieversorgungssysteme können durch ein oder mehrere (nicht explizit dargestellte) elektrische Energiequellen in dem Passagierflugzeug A gespeist werden.

Die elektrischen Energiequellen können beispielsweise eine oder mehrere Wechselspannungsquellen, wie beispielsweise Generatoren - insbesondere Triebwerksgeneratoren oder Generatoren von Staudruckturbinen - aufweisen. Alternativ oder zusätzlich dazu können die elektrischen Energiequellen beispielsweise Gleichspannungsquellen wie etwa Photovoltaikanlagen oder Brennstoffzellen umfassen. Die elektrischen Energiequellen können über elektrische Zuleitungen, die in oder an den Sitzbefestigungsschienen 11 entlang verlaufen, mit den jeweiligen Basismodulen der Energieversorgungssysteme elektrisch gekoppelt werden.

Die Energieversorgungssysteme können beispielsweise zur Versorgung von dauerhaft installierten elektrischen Verbrauchern wie etwa Displays eines Bordentertainmentsystems an Bord eines Passagierflugzeugs, Sitzbeleuchtungen von Passagiersitzen, Sitzaktuatoren oder ähnliches sowie temporär angeschlossene elektrische Verbraucher wie beispielsweise PEDs, Powerbanks oder ähnliche Verbraucher sein, die jeweils einem Sitz der Passagiersitzanordnung 100 zugeordnet sind und für einen auf den jeweiligen Sitz gebuchten Passagier für die Dauer einer Reise zur Nutzung vorgesehen sind.

Wie in FIG. 1 und 2 dargestellt, ist das elektrische Energieversorgungssystem derart modular aufgebaut, dass das Basismodul ein erstes Elektronikgehäuse 5 aufweist, in welchem elektrische Leistungswandlerkomponenten angeordnet sind. Das erste Elektronikgehäuse 5 kann auf oder an mindestens einer der Sitzbefestigungsschienen 11 installiert werden - andere Installationsmöglichkeiten, wie beispielsweise an einem Traggestell der Passagiersitzbaugruppe 10 oder ähnliches sind allerdings ebenfalls möglich.

Ein Peripheriemodul des elektrischen Energieversorgungssystems kann in einem zweiten Elektronikgehäuse 8 untergebracht, welches von dem ersten Elektronikgehäuse 5 separiert ist. Das erste Elektronikgehäuse 5 kann einen Versorgungsanschluss 6 aufweisen, über die ein oder mehrere zweite Elektronikgehäuse 8 über elektrische Zuleitungen 7 in Form drahtgebundener Verkabelung elektrisch angebunden werden können. Durch die Trennung zwischen erstem und zweitem Elektronikgehäuse 5 bzw. 8 in Basismodul und Peripheriemodul kann die Platzierung der zweiten Elektronikgehäuse 8 nach ergonomischen Gesichtspunkten an der Passagiersitzbaugruppe 10 erfolgen.

Das zweite Elektronikgehäuse 8 beherbergt elektrische Ausgangsanschlüsse für den Anschluss von elektronischen Endgeräten, wie beispielsweise PEDs von Passagieren. Die elektrischen Ausgangsanschlüsse können zum Beispiel USB-Buchsen, Sitzbeleuchtungsanschlüsse von Passagiersitzen, Wechselspannungsanschlüsse und/oder Sitzaktuatoranschlüsse umfassen. Über die drahtgebundene Verkabelung 7 wird der Versorgungsanschluss 6 der elektrischen Leistungswandlerkomponenten des ersten Elektronikgehäuses 5 elektrisch mit den elektrischen Ausgangsanschlüssen des zweiten Elektronikgehäuses 8 verbunden.

Die elektrischen Ausgangsschnittstellen im zweiten Elektronikgehäuse 8 können insbesondere USB-Schnittstellen sein, die gemäß der USB-Power-Delivery- und/oder der USB-Battery-Charging-Spezifikation arbeiten. Elektrische Verbraucher, die an diese USB-Schnittstellen angeschlossen werden, beispielsweise PEDs von Passagieren eines Passagierflugzeugs A, können demnach aus dem Energieversorgungssystem elektrische Leistung beziehen.

In dem ersten Elektronikgehäuse 5 können Öffnungen für eine passive Luftkühlung der darin angeordneten elektrischen Leistungswandlerkomponenten vorgesehen werden. Alternativ oder zusätzlich dazu kann es auch möglich sein, die elektrischen Leistungswandlerkomponenten innerhalb des ersten Elektronikgehäuses 5 durch ein geeignetes Kühlungssystem aktiv zu kühlen.

Die Passagiersitzanordnung 100 weist in der näheren Umgebung der Passagiersitzbaugruppe 10 eine Vielzahl von der jeweiligen Passagiersitzbaugruppe 10 zugeordneten Sensoren auf, die jeweils mit einer Sensordatenschnittstelle 9 des ersten Elektronikgehäuses 5 des elektrischen Energieversorgungssystems gekoppelt sind. Zum Beispiel kann ein optischer Sensor 1 vorgesehen werden, welcher optische Signale wie etwa Videoaufnahmen oder andere Bilddaten von dem Passagiersitz und/oder einem dem Passagiersitz zugeordneten Passagier erfassen kann. Ein Sitzbelegungssensor 2 beispielsweise kann die Belastung einer Sitzfläche messen, um dadurch zu bestimmten, ob sich ein Passagier auf dem Sitz befindet und ob er Bewegungen ausführt. Ein Sitzpositionssensor 4 kann beispielsweise in der Rückenlehne des Passagiersitzes vorgesehen werden, um die Neigung der Rückenlehne zu bestimmen. Andere Sensoren 3 wie beispielsweise Temperatursensoren, Stromsensoren, Spannungssensoren, Bewegungssensoren und/oder Ultraschallsensoren können ebenfalls vorgesehen werden, zum Beispiel in einer über der Passagiersitzbaugruppe 10 angeordneten Passagierserviceeinrichtung 12. Es kann weiterhin möglich sein, dass elektrische Sensoren wie etwa Spannungs-und/oder Stromsensoren an elektrischen Ausgangsanschlüssen des zweiten Elektronikgehäuses 8 (z.B. USB-Buchsen, Sitzbeleuchtungsanschlüssen von Passagiersitzen, Wechselspannungsanschlüssen und/oder Sitzaktuatoranschlüssen) angeschlossen sind, um zeitaufgelöste Nutzungsdaten der USB-Buchsen, Sitzbeleuchtungsanschlüsse, Wechselspannungsanschlüsse und/oder Sitzaktuatoranschlüsse zu erfassen.

Die von den verschiedenen Sensoren 1, 2, 3 und/oder 4 erfassten Sensordaten können in das erste Elektronikgehäuse 5 über eine Sensordatenschnittstelle 9 eingespeist werden. In dem ersten Elektronikgehäuse 5 ist eine Sensordatenverarbeitungseinrichtung 5a angeordnet, die dazu ausgelegt ist, die von den Sensoren 1, 2, 3 und/oder 4 erfassten Sensordaten aufzubereiten. Nach der Aufbereitung werden die aufbereiteten Sensordaten an eine zentrale Sensordatenauswertevorrichtung 40 des Passagierflugzeugs A weitergeleitet. Die zentrale Sensordatenauswertevorrichtung 40 des Passagierflugzeugs A kann damit von verschiedenen im Passagierflugzeug verteilten Passagiersitzanordnungen 100 jeweils passagierbezogene Sensordaten ermitteln und zentral auswerten.

Neben den von den verschiedenen Sensoren 1, 2, 3 und/oder 4 erfassten Sensordaten können auch Umgebungsdaten aus der Umgebung des Passagierflugzeugs A in der Sensordatenverarbeitungseinrichtung 5a berücksichtigt werden. Dazu können Umgebungsdaten aus der Umgebung des Passagierflugzeugs A empfangen werden. Diese Umgebungsdaten können zum Beispiel Daten über die geographische Position des Passagierflugzeugs A, über die Umgebungstemperatur des Passagierflugzeugs A, über den Abflug- und/oder Zielort des Passagierflugzeugs A, über das vorhergesagte Wetter am Abflug- und/oder Zielort des Passagierflugzeugs A und/oder über die Lokalzeit des Passagierflugzeugs A umfassen. Umgebungsdaten können dabei beispielsweise von einem Avionikserver 20 an Bord des Passagierflugzeugs A und/oder von einer weiteren Umgebungsdatenquelle 30 außerhalb des Passagierflugzeugs A, beispielsweise einem Server am Boden oder einem Avionikserver eines anderen Passagierflugzeugs stammen. Die Sensordatenverarbeitungseinrichtung 5a erhält die Umgebungsdaten, korreliert die empfangenen Umgebungsdaten hinsichtlich Ort und Zeit mit den erfassten Sensordaten und berücksichtigt derartig ermittelte Korrelationen bei der Aufbereitung der von den Sensoren über die Sensordatenschnittstelle 9 erfassten Sensordaten.

FIG. 4 zeigt ein Flussdiagramm von Verfahrensschritten eines Verfahrens M zur passagierbezogenen Sensordatenerfassung in einer Passagiersitzanordnung in einem Passagierflugzeug, beispielsweise der im Zusammenhang mit den FIG. 1 und 2 gezeigten und erläuterten Passagiersitzanordnung 100. Das Verfahren M kann insbesondere in einem Passagierflugzeug A mit Passagiersitzanordnungen 100 wie im Zusammenhang mit FIG. 3 erläutert durchgeführt werden.

Zunächst werden in einem ersten Schritt M1 passagierbezogene Sensordaten durch eine Vielzahl von einer Passagiersitzbaugruppe 10 mit mindestens einem Passagiersitz zugeordnete Sensoren erfasst. Beispielweise können solche Sensoren optische Sensoren wie etwa Videokameras, Sitzbelegungssensoren, Sitzpositionssensoren, Temperatursensoren, Stromsensoren, Spannungssensoren, Bewegungssensoren und/oder Ultraschallsensoren umfassen. Die optischen Sensoren können beispielsweise in einer Rückenlehne oder einer Passagierserviceeinrichtung installierte Sensoren sein, die die Sitzposition, Augenbewegungen oder andere physische Merkmale eines Passagiers dauerhaft oder in bestimmten Zeitintervallen überwachen können. Strom- oder Spannungssensoren können vorgesehen werden, um die Nutzung der elektrischen Ausgangsanschlüsse für den Anschluss von elektronischen Endgeräten, die in dem zweiten Elektronikgehäuse 8 des elektrischen Energieversorgungssystems angeordnet sind, an der Passagiersitzbaugruppe 10 zu überwachen. Sitzbelegungssensoren können überwachen, ob ein Passagier auf seinem Sitz sitzt oder ob und in welchem Umfang er sich auf seinem Sitz bewegt, um beispielweise überwachen zu können, ob der Passagier gerade schläft. Sitzpositionssensoren können zum Beispiel eine Einstellung der Rückenlehne eines Passagiersitzes überwachen.

Die erfassten passagierbezogenen Sensordaten können in einem Schritt M2 über eine Sensordatenschnittstelle 9 eines ersten Elektronikgehäuses 5, in welchem elektrische Leistungswandlerkomponenten angeordnet sind, eines der Passagiersitzbaugruppe 10 zugeordneten elektrischen Energieversorgungssystems übermittelt werden. Die erfassten Sensordaten können durch eine Sensordatenverarbeitungseinrichtung 5a des elektrischen Energieversorgungssystems in einem Schritt M3 aufbereitet werden. Die Sensordatenverarbeitungseinrichtung 5a kann beispielsweise ein dedizierter Prozessor sein, welcher in dem ersten Elektronikgehäuse 5 untergebracht und mit der Sensordatenschnittstelle 9 gekoppelt ist.

Optional können in einem Schritt M4 Umgebungsdaten aus der Umgebung des Passagierflugzeugs A empfangen werden. Diese Umgebungsdaten können zum Beispiel Daten über die geographische Position des Passagierflugzeugs A, über die Umgebungstemperatur des Passagierflugzeugs A, über den Abflug- und/oder Zielort des Passagierflugzeugs A, über das vorhergesagte Wetter am Abflug- und/oder Zielort des Passagierflugzeugs A und/oder über die Lokalzeit des Passagierflugzeugs A umfassen. Umgebungsdaten können dabei beispielsweise von einem Avionikserver 20 an Bord des Passagierflugzeugs A und/oder von einer weiteren Umgebungsdatenquelle 30 außerhalb des Passagierflugzeugs A, beispielsweise einem Server am Boden oder einem Avionikserver eines anderen Passagierflugzeugs stammen. Die Sensordatenverarbeitungseinrichtung 5a erhält die Umgebungsdaten, korreliert die empfangenen Umgebungsdaten hinsichtlich Ort und Zeit mit den erfassten Sensordaten und berücksichtigt derartig ermittelte Korrelationen bei der Aufbereitung der von den Sensoren über die Sensordatenschnittstelle 9 erfassten Sensordaten.

Schließlich werden in einem Schritt M5 die durch die Sensordatenverarbeitungseinrichtung 5a aufbereiteten und gegebenenfalls unter Berücksichtigung der empfangenen Umgebungsdaten bearbeiteten Sensordaten an eine zentrale Sensordatenauswertevorrichtung 40 des Passagierflugzeugs A weitergeleitet. Dazu kann die Sensordatenverarbeitungseinrichtung 5a über in oder an der Sitzbefestigungsschiene 11 entlang verlaufende Datenleitungen mit der Sensordatenauswertevorrichtung 40 des Passagierflugzeugs A verbunden sein. Alternativ oder zusätzlich dazu kann auch eine drahtlose Datenübertragung von den jeweiligen Sensordatenverarbeitungseinrichtungen 5a an die zentrale Sensordatenauswertevorrichtung 40 des Passagierflugzeugs A erfolgen. Die zentrale Sensordatenauswertevorrichtung 40 kann die erfassten Sensordaten der Sensordatenverarbeitungseinrichtung 5a auswerten und basierend darauf verschiedenen weiteren Einheiten an Bord des Passagierflugzeugs A passagierbezogene Informationen zukommen lassen. Beispielsweise kann die zentrale Sensordatenauswertevorrichtung 40 mit einem oder mehreren Endgeräte 50 eines Bordentertainmentsystems des Passagierflugzeugs A gekoppelt sein, und auf der Basis der ausgewerteten Sensordaten für jede der Passagiersitzanordnungen 100 passagierbezogene Anzeigeinhalte an das zugeordnete Endgerät 50 eines Bordentertainmentsystems übertragen.

Über die erfassten Sensordaten können - gegebenenfalls unter Hinzuziehung von Umgebungsdaten des Flugzeugs - mittels geeigneter Auswertealgorithmen, beispielsweise auf der Basis von künstlicher Intelligenz, Rückschlüsse auf Bedürfnisse und Komfort der einzelnen Passagiere gezogen werden. Dadurch können in einem Passagierflugzeug passagierbezogene Komfort- und Serviceangebote gemacht werden, durch die der Aufenthalt der Passagier so angenehm wie möglich gestaltet und das Flugerlebnis individualisiert werden kann. Über die Sensordatenauswertung können maßgeschneidert Handlungsanweisungen, Empfehlungen oder Servicevorschläge direkt an die Flugbegleiter erstellt werden. Zusätzlich dazu können den Passagieren auf deren persönlichen Endgeräten oder auf Endgeräten des Bordentertainmentsystems Hinweise und Vorschläge zur Verbesserung des Flugkomforts unterbreitet werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Passagiersitzanordnung (100) für ein Passagierflugzeug (A), umfassend:
eine Passagiersitzbaugruppe (10) mit mindestens einem Passagiersitz;
ein elektrisches Energieversorgungssystem, welches ein erstes Elektronikgehäuse (5), in welchem elektrische Leistungswandlerkomponenten angeordnet sind, und ein zweites Elektronikgehäuse (8), in welchem elektrische Ausgangsanschlüsse für den Anschluss von elektronischen Endgeräten angeordnet sind, aufweist; und
eine Vielzahl von der Passagiersitzbaugruppe (10) zugeordneten Sensoren (1; 2; 3; 4), welche mit einer Sensordatenschnittstelle (9) des ersten Elektronikgehäuses (5) des elektrischen Energieversorgungssystems gekoppelt sind,
wobei das elektrische Energieversorgungssystem eine Sensordatenverarbeitungseinrichtung (5a) aufweist, die dazu ausgelegt ist, von den Sensoren (1; 2; 3; 4) über die Sensordatenschnittstelle (9) erfasste Sensordaten aufzubereiten und an eine zentrale Sensordatenauswertevorrichtung (40) des Passagierflugzeugs (A) weiterzuleiten.

2. Passagiersitzanordnung (100) gemäß Anspruch 1, wobei die Vielzahl von Sensoren (1; 2; 3; 4) optische Sensoren, Sitzbelegungssensoren (2), Sitzpositionssensoren, Temperatursensoren, Stromsensoren, Spannungssensoren, Bewegungssensoren und/oder Ultraschallsensoren umfasst.

3. Passagiersitzanordnung (100) gemäß Anspruch 1 oder 2, wobei die Sensordatenverarbeitungseinrichtung (5a) weiterhin dazu ausgelegt ist, Umgebungsdaten aus der Umgebung des Passagierflugzeugs (A) zu empfangen und die von den Sensoren (1; 2; 3; 4) über die Sensordatenschnittstelle (9) erfassten Sensordaten im Zusammenhang mit den empfangenen Umgebungsdaten aufzubereiten.

4. Passagiersitzanordnung (100) gemäß Anspruch 3, wobei die empfangenen Umgebungsdaten Daten über die geographische Position des Passagierflugzeugs (A), über die Umgebungstemperatur des Passagierflugzeugs (A), über den Abflug- und/oder Zielort des Passagierflugzeugs (A), über das vorhergesagte Wetter am Abflug- und/oder Zielort des Passagierflugzeugs (A) und/oder über die Lokalzeit des Passagierflugzeugs (A) umfassen.

5. Passagiersitzanordnung (100) gemäß einem der Ansprüche 1 bis 4, wobei die elektrischen Ausgangsanschlüsse des zweiten Elektronikgehäuses (8) USB-Buchsen, Sitzbeleuchtungsanschlüsse von Passagiersitzen, Wechselspannungsanschlüsse und/oder Sitzaktuatoranschlüsse umfassen und wobei die von den Sensoren (1; 2; 3; 4) über die Sensordatenschnittstelle (9) erfassten Sensordaten zeitaufgelöste Nutzungsdaten der USB-Buchsen, Sitzbeleuchtungsanschlüsse, Wechselspannungsanschlüsse und/oder Sitzaktuatoranschlüsse umfassen.

6. Passagierflugzeug (A), umfassend:
eine Passagierkabine;
mindestens eine elektrische Energiequelle;
einer Sensordatenauswertevorrichtung (40); und
mindestens eine Passagiersitzanordnung (100) gemäß einem der Ansprüche 1 bis 5, die mit einer Sitzbefestigungsschiene (11) im Kabinenboden der Passagierkabine montiert ist, und deren zweites Elektronikgehäuse (8) jeweils mit der mindestens einen elektrischen Energiequelle über in oder an der Sitzbefestigungsschiene (11) entlang verlaufende elektrische Zuleitungen verbunden ist.

7. Passagierflugzeug (A) gemäß Anspruch 6, weiterhin mit einem Avionikserver (20), welcher mit dem erstes Elektronikgehäuse (5) des elektrischen Energieversorgungssystems gekoppelt ist und welcher dazu ausgelegt ist, Umgebungsdaten aus der Umgebung des Passagierflugzeugs (A) an die Sensordatenverarbeitungseinrichtung (5a) weiterzuleiten.

8. Passagierflugzeug (A) gemäß einem der Ansprüche 6 und 7, wobei die Vielzahl von Sensoren (1; 2; 3; 4) Sensoren aufweist, welche in einer in der Passagierserviceeinheit (12) über der Passagiersitzanordnung (100) angeordnet sind.

9. Passagierflugzeug (A) gemäß einem der Ansprüche 6 bis 8, wobei die Passagiersitzanordnung (100) mindestens zwei nebeneinander angeordnete Passagiersitze (1, 2) aufweist.

10. Passagierflugzeug (A) gemäß Anspruch 9, wobei die Passagiersitzanordnung (100) ein Endgerät (50) eines Bordentertainmentsystems aufweist und die Sensordatenauswertevorrichtung (40) des Passagierflugzeugs (A) dazu ausgelegt ist, erfasste Sensordaten der Sensordatenverarbeitungseinrichtung (5a) auszuwerten und auf der Basis der ausgewerteten Sensordaten für jede der Passagiersitzanordnungen (100) passagierbezogene Anzeigeinhalte an das zugeordnete Endgerät (50) eines Bordentertainmentsystems zu übertragen.

11. Passagierflugzeug (A) gemäß einem der Ansprüche 6 bis 10, wobei die Sensordatenverarbeitungseinrichtung (5a) über in oder an der Sitzbefestigungsschiene (11) entlang verlaufende Datenleitungen mit der Sensordatenauswertevorrichtung (40) des Passagierflugzeugs (A) verbunden ist.

12. Verfahren (M) zur passagierbezogenen Sensordatenerfassung in einer Passagiersitzanordnung (100) in einem Passagierflugzeug (A), umfassend:
Erfassen (M1) von passagierbezogenen Sensordaten durch eine Vielzahl von einer Passagiersitzbaugruppe (10) mit mindestens einem Passagiersitz zugeordneten Sensoren (1; 2; 3; 4);
Übermitteln (M2) der erfassten passagierbezogenen Sensordaten über eine Sensordatenschnittstelle (9) eines ersten Elektronikgehäuses (5), in welchem elektrische Leistungswandlerkomponenten angeordnet sind, eines der Passagiersitzbaugruppe (10) zugeordneten elektrischen Energieversorgungssystems;
Aufbereiten (M3) der von den Sensoren (1; 2; 3; 4) über die Sensordatenschnittstelle (9) erfassten Sensordaten durch eine Sensordatenverarbeitungseinrichtung (5a) des elektrischen Energieversorgungssystems; und
Weiterleiten (M5) der durch die Sensordatenverarbeitungseinrichtung (5a) aufbereiteten Sensordaten an eine zentrale Sensordatenauswertevorrichtung (40) des Passagierflugzeugs (A).

13. Verfahren (M) gemäß Anspruch 12, weiterhin mit dem Schritt des Erfassens (M4) von Umgebungsdaten aus der Umgebung des Passagierflugzeugs (A), welche von der Sensordatenverarbeitungseinrichtung (5a) bei der Aufbereitung der von den Sensoren (1; 2; 3; 4) über die Sensordatenschnittstelle (9) erfassten Sensordaten berücksichtigt werden.

14. Verfahren (M) gemäß Anspruch 13, wobei die empfangenen Umgebungsdaten Daten über die geographische Position des Passagierflugzeugs (A), über die Umgebungstemperatur des Passagierflugzeugs (A), über den Abflug- und/oder Zielort des Passagierflugzeugs (A), über das vorhergesagte Wetter am Abflug-und/oder Zielort des Passagierflugzeugs (A) und/oder über die Lokalzeit des Passagierflugzeugs (A) umfassen.

15. Verfahren (M) gemäß einem der Ansprüche 12 bis 14, wobei die Vielzahl von Sensoren (1; 2; 3; 4) optische Sensoren, Sitzbelegungssensoren (2), Sitzpositionssensoren, Temperatursensoren, Stromsensoren, Spannungssensoren, Bewegungssensoren und/oder Ultraschallsensoren umfasst.

## Claims

1. Passenger seat arrangement (100) for a passenger aircraft (A), comprising:
a passenger seat assembly (10) having at least one passenger seat;
an electrical energy supply system which has a first electronics housing (5), in which electrical power converter components are arranged, and a second electronics housing (8), in which electrical output connections for connecting electronic terminals are arranged; and
a multiplicity of sensors (1; 2; 3; 4) which are assigned to the passenger seat assembly (10) and are coupled to a sensor data interface (9) of the first electronics housing (5) of the electrical energy supply system,
wherein the electrical energy supply system has a sensor data processing device (5a) which is designed to preprocess sensor data acquired from the sensors (1; 2; 3; 4) via the sensor data interface (9) and to forward said data to a central sensor data evaluation apparatus (40) of the passenger aircraft (A).

2. Passenger seat arrangement (100) according to Claim 1, wherein the multiplicity of sensors (1; 2; 3; 4) comprise optical sensors, seat occupancy sensors (2), seat position sensors, temperature sensors, current sensors, voltage sensors, motion sensors and/or ultrasonic sensors.

3. Passenger seat arrangement (100) according to Claim 1 or 2, wherein the sensor data processing device (5a) is also designed to receive environmental data from the environment of the passenger aircraft (A) and to preprocess the sensor data acquired from the sensors (1; 2; 3; 4) via the sensor data interface (9) in conjunction with the received environmental data.

4. Passenger seat arrangement (100) according to Claim 3, wherein the received environmental data comprise data relating to the geographical position of the passenger aircraft (A), the ambient temperature of the passenger aircraft (A), the departure point and/or destination of the passenger aircraft (A), the forecasted weather at the departure point and/or destination of the passenger aircraft (A) and/or the local time of the passenger aircraft (A).

5. Passenger seat arrangement (100) according to one of Claims 1 to 4, wherein the electrical output connections of the second electronics housing (8) comprise USB sockets, seat lighting connections of passenger seats, AC voltage connections and/or seat actuator connections, and wherein the sensor data acquired from the sensors (1; 2; 3; 4) via the sensor data interface (9) comprise time-resolved usage data relating to the USB sockets, seat lighting connections, AC voltage connections and/or seat actuator connections.

6. Passenger aircraft (A) comprising:
a passenger cabin;
at least one electrical energy source;
a sensor data evaluation apparatus (40); and
at least one passenger seat arrangement (100) according to one of Claims 1 to 5 which is installed in the cabin floor of the passenger cabin using a seat fastening rail (11) and the second electronics housing (8) of which is respectively connected to the at least one electrical energy source via electrical supply lines running along in or on the seat fastening rail (11).

7. Passenger aircraft (A) according to Claim 6, also having an avionics server (20) which is coupled to the first electronics housing (5) of the electrical energy supply system and which is designed to forward environmental data from the environment of the passenger aircraft (A) to the sensor data processing device (5a).

8. Passenger aircraft (A) according to either of Claims 6 and 7, wherein the multiplicity of sensors (1; 2; 3; 4) have sensors which are arranged in a in the passenger service unit (12) above the passenger seat arrangement (100) .

9. Passenger aircraft (A) according to one of Claims 6 to 8, wherein the passenger seat arrangement (100) has at least two passenger seats (1, 2) arranged beside one another.

10. Passenger aircraft (A) according to Claim 9, wherein the passenger seat arrangement (100) has a terminal (50) of an on-board entertainment system, and the sensor data evaluation apparatus (40) of the passenger aircraft (A) is designed to evaluate acquired sensor data from the sensor data processing device (5a) and, on the basis of the evaluated sensor data, to transmit passenger-based display contents to the assigned terminal (50) of an on-board entertainment system for each of the passenger seat arrangements (100).

11. Passenger aircraft (A) according to one of Claims 6 to 10, wherein the sensor data processing device (5a) is connected to the sensor data evaluation apparatus (40) of the passenger aircraft (A) via data lines running along in or on the seat fastening rail (11).

12. Method (M) for passenger-based sensor data acquisition in a passenger seat arrangement (100) in a passenger aircraft (A), comprising:
acquiring (M1) passenger-based sensor data by means of a multiplicity of sensors (1; 2; 3; 4) assigned to a passenger seat assembly (10) having at least one passenger seat;
transmitting (M2) the acquired passenger-based sensor data via a sensor data interface (9) of a first electronics housing (5), in which electrical power converter components are arranged, of an electrical energy supply system assigned to the passenger seat assembly (10);
preprocessing (M3) the sensor data acquired from the sensors (1; 2; 3; 4) via the sensor data interface (9) by means of a sensor data processing device (5a) of the electrical energy supply system; and
forwarding (M5) the sensor data preprocessed by the sensor data processing device (5a) to a central sensor data evaluation apparatus (40) of the passenger aircraft (A) .

13. Method (M) according to Claim 12, also having the step of acquiring (M4) environmental data from the environment of the passenger aircraft (A), which data are taken into account by the sensor data processing device (5a) when preprocessing the sensor data acquired from the sensors (1; 2; 3; 4) via the sensor data interface (9).

14. Method (M) according to Claim 13, wherein the received environmental data comprise data relating to the geographical position of the passenger aircraft (A), the ambient temperature of the passenger aircraft (A), the departure point and/or destination of the passenger aircraft (A), the forecasted weather at the departure point and/or destination of the passenger aircraft (A) and/or the local time of the passenger aircraft (A).

15. Method (M) according to one of Claims 12 to 14, wherein the multiplicity of sensors (1; 2; 3; 4) comprise optical sensors, seat occupancy sensors (2), seat position sensors, temperature sensors, current sensors, voltage sensors, motion sensors and/or ultrasonic sensors.

## Revendications

1. Agencement de siège passager (100) destiné à un avion de ligne (A), comprenant :
un ensemble de sièges passagers (10) comportant au moins un siège passager ;
un système d'alimentation en énergie électrique qui comporte un premier boîtier électronique (5) dans lequel sont disposés des composants de conversion de puissance électrique, et un second boîtier électronique (8) dans lequel sont disposées des connexions de sortie électriques pour la connexion de terminaux électroniques ; et
une pluralité de capteurs (1 ; 2 ; 3 ; 4) associés à l'ensemble de sièges passagers (10), qui sont couplés à une interface de données de capteurs (9) du premier boîtier électronique (5) du système d'alimentation en énergie électrique,
dans lequel le système d'alimentation en énergie électrique comporte un dispositif de traitement de données de capteurs (5a) qui est conçu pour préparer des données de capteurs détectées par les capteurs (1 ; 2 ; 3 ; 4) par l'intermédiaire de l'interface de données de capteurs (9) et pour les transmettre à un dispositif d'évaluation de données de capteurs central (40) de l'avion de ligne (A).

2. Agencement de siège passager (100) selon la revendication 1, dans lequel la pluralité de capteurs (1 ; 2 ; 3 ; 4) comprend des capteurs optiques, des capteurs d'occupation de siège (2), des capteurs de position de siège, des capteurs de température, des capteurs de courant, des capteurs de tension, des capteurs de mouvement et/ou des capteurs à ultrasons.

3. Agencement de siège passager (100) selon la revendication 1 ou 2, dans lequel le dispositif de traitement de données de capteurs (5a) est en outre conçu pour recevoir des données d'environnement provenant de l'environnement de l'avion de ligne (A) et pour préparer les données de capteurs détectées par les capteurs (1 ; 2 ; 3 ; 4) par l'intermédiaire de l'interface de données de capteurs (9) en relation avec les données d'environnement reçues.

4. Agencement de siège passager (100) selon la revendication 3, dans lequel les données d'environnement reçues comprennent des données concernant la position géographique de l'avion de ligne (A), la température ambiante de l'avion de ligne (A), le lieu de départ et/ou de destination de l'avion de ligne (A), la météo prévue au lieu de départ et/ou de destination de l'avion de ligne (A) et/ou l'heure locale de l'avion de ligne (A).

5. Agencement de siège passager (100) selon l'une des revendications 1 à 4, dans lequel les bornes de sortie électriques du second boîtier électronique (8) comprennent des prises USB, des bornes d'éclairage de siège passager, des bornes de tension alternative et/ou des bornes d'actionneur de siège, et dans lequel les données de capteurs détectées par les capteurs (1 ; 2 ; 3 ; 4) par l'intermédiaire de l'interface de données de capteurs (9) comprennent des données d'utilisation résolues temporellement des prises USB, des prises d'éclairage de siège, des prises de tension alternative et/ou des prises d'actionneur de siège.

6. Avion de ligne (A), comprenant :
une cabine passagers ;
au moins une source d'énergie électrique ;
un dispositif d'évaluation des données de capteurs (40) ; et
au moins un agencement de sièges passagers (100) selon l'une des revendications 1 à 5, qui est monté au moyen d'un rail de fixation de siège (11) dans le plancher de cabine de la cabine passagers, et dont le second boîtier électronique (8) est relié respectivement à ladite au moins une source d'énergie électrique par l'intermédiaire de lignes d'alimentation électrique s'étendant dans ou le long du rail de fixation de siège (11).

7. Avion de ligne (A) selon la revendication 6, comprenant en outre un serveur d'avionique (20) qui est couplé au premier boîtier électronique (5) du système d'alimentation en énergie électrique et qui est conçu pour transmettre des données d'environnement provenant de l'environnement de l'avion de ligne (A) au dispositif de traitement de données de capteurs (5a).

8. Avion de ligne (A) selon l'une des revendications 6 et 7, dans lequel la pluralité de capteurs (1 ; 2 ; 3 ; 4) comprend des capteurs qui sont disposés dans une dans l'unité de service de passagers (12) au-dessus de l'agencement de sièges passagers (100).

9. Avion de ligne (A) selon l'une des revendications 6 à 8, dans lequel l'agencement de sièges passagers (100) comporte au moins deux sièges passagers (1, 2) disposés côte à côte.

10. Avion de ligne (A) selon la revendication 9, dans lequel l'agencement de sièges passagers (100) comporte un terminal (50) d'un système de divertissement à bord et le dispositif d'évaluation de données de capteurs (40) de l'avion de ligne (A) est conçu pour évaluer des données de capteurs détectées provenant du dispositif de traitement de données de capteurs (5a) et pour transmettre au terminal associé (50) d'un système de divertissement à bord, des contenus d'affichage liés aux passagers, pour chacun des agencements de sièges passagers (100), sur la base des données de capteurs évaluées (100).

11. Avion de ligne (A) selon l'une des revendications 6 à 10, dans lequel le dispositif de traitement de données de capteurs (5a) est relié au dispositif d'évaluation de données de capteurs (40) de l'avion de ligne (A) par l'intermédiaire de lignes de données s'étendant dans ou le long du rail de fixation de siège (11).

12. Procédé (M) de détection de données de capteurs relatives aux passagers dans un agencement de sièges passagers (100) d'un avion de ligne (A), comprenant :
la détection (M1) de données de capteurs relatives aux passagers par une pluralité de capteurs (1 ; 2 ; 3 ; 4) associés à un ensemble de sièges passagers (10) comportant au moins un siège passager ;
la transmission (M2) des données de capteurs détectées relatives aux passagers par l'intermédiaire d'une interface de données de capteurs (9) d'un premier boîtier électronique (5) dans lequel sont disposés des composants de conversion de puissance électrique, d'un système d'alimentation en énergie électrique associé à l'ensemble de sièges passagers (10) ;
la préparation (M3) des données de capteurs détectées par les capteurs (1 ; 2 ; 3 ; 4) par l'intermédiaire de l'interface de données de capteurs (9) par un dispositif de traitement de données de capteurs (5a) du système d'alimentation en énergie électrique ; et
la transmission (M5) des données de capteurs préparées par le dispositif de traitement de données de capteurs (5a) à un dispositif d'évaluation de données de capteurs central (40) de l'avion de ligne (A).

13. Procédé (M) selon la revendication 12, comprenant en outre l'étape de détection (M4) de données d'environnement provenant de l'environnement de l'avion de ligne (A), qui sont prises en compte par le dispositif de traitement de données de capteurs (5a) lors de la préparation des données de capteurs détectées par les capteurs (1 ; 2 ; 3 ; 4) par l'intermédiaire de l'interface de données de capteurs (9).

14. Procédé (M) selon la revendication 13, dans lequel les données d'environnement reçues comprennent des données concernant la position géographique de l'avion de ligne (A), la température ambiante de l'avion de ligne (A), le lieu de départ et/ou de destination de l'avion de ligne (A), la météo prévue au lieu de départ et/ou de destination de l'avion de ligne (A) et/ou l'heure locale de l'avion de ligne (A).

15. Procédé (M) selon l'une des revendications 12 à 14, dans lequel la pluralité de capteurs (1 ; 2 ; 3 ; 4) comprend des capteurs optiques, des capteurs d'occupation de siège (2), des capteurs de position de siège, des capteurs de température, des capteurs de courant, des capteurs de tension, des capteurs de mouvement et/ou des capteurs à ultrasons.
